(19) **Europäisches Patentamt**
**European Patent Office**
**Office européen des brevets**

(11) **EP 2 496 055 B1**

(12) **EUROPEAN PATENT SPECIFICATION**

(45) Date of publication and mention
of the grant of the patent:
**06.01.2016 Bulletin 2016/01**

(21) Application number: **10826564.6**

(22) Date of filing: **19.10.2010**

(51) Int Cl.:
***H05B 33/10*** *(2006.01)*    ***H05B 33/20*** *(2006.01)*

(86) International application number:
**PCT/JP2010/068384**

(87) International publication number:
**WO 2011/052432 (05.05.2011 Gazette 2011/18)**

(54) **LIGHT-EMITTING COMPOSITION, ELECTROLUMINESCENT SHEET, AND METHOD FOR PRODUCING SAME**

LICHTEMITTIERENDE ZUSAMMENSETZUNG, ELEKTROLUMINESZENTE FOLIE UND HERSTELLUNGSVERFAHREN DAFÜR

COMPOSITION ÉMETTRICE DE LUMIÈRE, FEUILLE ÉLECTROLUMINESCENTE ET PROCÉDÉ DE FABRICATION DE CETTE FEUILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2009 JP 2009249302**

(43) Date of publication of application:
**05.09.2012 Bulletin 2012/36**

(73) Proprietor: **LINTEC Corporation**
**Tokyo 173-0001 (JP)**

(72) Inventors:
• **NAGANAWA, Satoshi**
**Tokyo 173-0001 (JP)**

• **AMINO, Yumiko**
**Tokyo 173-0001 (JP)**
• **ONO, Yoshitomo**
**Tokyo 173-0001 (JP)**

(74) Representative: **Gille Hrabal**
**Brucknerstrasse 20**
**40593 Düsseldorf (DE)**

(56) References cited:
**JP-A- 2000 100 571    JP-A- 2002 043 064**
**JP-A- 2002 329 581    JP-A- 2005 227 571**
**JP-A- 2008 269 964    JP-A- 2009 223 023**
**US-A- 3 421 037    US-A1- 2008 213 621**

**Description**

Technical Field

The present invention relates to a light-emitting composition, an electroluminescent sheet, and a method for producing thereof, and more particularly relates to a light-emitting composition that can be laminated onto an electrode at ambient temperature, an electroluminescent sheet comprising the light-emitting composition with high luminance and high reliability which can be mass produced at low cost and efficiently, and a method for producing thereof.

Background Art

An electroluminescent device connected to an alternating-current source, for example, an inorganic EL device, can be formed on paper or a polymer film by a printing technique, and forms a market as an illumination device required to have flexibility. The inorganic EL device of this type is produced, for example, as disclosed in Patent Document 1, by laminating a dielectric material and a light-emitting material, each of which is dispersed in a resin binder, on an electrode by using a screen printing technique. However, an electroluminescent sheet produced by the technique has a problem that it requires a large number of process steps and thus is not suitable for mass production.

Patent Document 2 provides an electroluminescent sheet that has high luminance and high reliability by using a resin binder having a large dielectric constant in a light-emitting layer. However the resin binder has no pressure-sensitive adhesive property at ambient temperature and is required to be adhered under heating on laminating onto an electrode, which may bring about a problem of causing not only damages on the base material and the electrode, but also considerable deterioration of the production efficiency.

Patent Document 3 describes a dielectric medium in which an electroluminescent phosphor is dispersed in a mixture of cyanoethylated cellulose and poly-2,2,2-trifluoroethyl vinyl ether (TFVE). The mixture is described to display a good adhesion to conductive glass.

In this context, there is a demand of an electroluminescent sheet that can be produced at ambient temperature without heating, has high productivity and can be mass produced at low cost, and a method for producing thereof.

Related Art Documents

Patent Documents

Patent Document 1
JP-B-7-58636
Patent Document 2
JP-A-5-47472
Patent Document 3
US 3,421,037

Summary of the Invention

Problems to be solved by the Invention

The present invention is provided in order to solve the above problems. It is an object of the present invention to provide an electroluminescent sheet which can be produced at ambient temperature without heating, has high productivity and can be mass produced at low cost, a method for producing thereof, and a light-emitting composition used therein.

Means for solving the Problems

To achieve the above object, as a result of investigation, the inventors has found that the object is achieved by using a light-emitting composition comprising a compound having a cyanoethyl group, a pressure-sensitive adhesive resin material and an electroluminescent material in predetermined amounts, and thus the present invention has been completed.

The present invention provides:

(1) a light-emitting composition comprising (A) a compound having a cyanoethyl group, (B) a pressure-sensitive adhesive resin material which contains at least one selected from (a) a pressure-sensitive adhesive resin material having a glass transition temperature of from -70 to 5ºC and (b) a pressure-sensitive adhesive resin material containing a rubber-like hydrocarbon elastomer and a tackifier, and (C) an electroluminescent material, wherein an amount of the component (B) is from 1 to 1,000 parts by mass per 100 parts by mass of the component (A),

(2) the light-emitting composition according to (1), wherein the component (A) has a mass average molecular weight of 10,000 to 200,000,

(3) the light-emitting composition according to (1), wherein an amount of the component (C) is from 0.5 to 600 parts by mass per 100 parts by mass of the total of the component (A) and the component(B),

(4) the light-emitting composition according to (1), wherein the component (C) is dispersed into a mixture of the component (A) and the component (B),

(5) the light-emitting composition according to claim 4, wherein the mixture of the component (A) and the component (B) has a relative dielectric constant of 6 or more,

(6) the light-emitting composition according to any of (1) to (5), the composition having pressure-sensitive adhesive property,

(7) an electroluminescent sheet comprising at least a first electrode, an electroluminescent layer and a second electrode, laminated in this order, wherein at least one of the first electrode and the second electrode being transparent, and the electroluminescent layer contains the light-emitting composition according to any one of (1) to (6), and

(8) a method for producing the electroluminescent sheet according to (7), by using a coating apparatus comprising at least a unwinding roll part, a wind-up roll part, a coating part and an laminating part, which comprising any one of electrode of the first electrode and the second electrode wound-up into a roll being unwound; the unwound electrode being coated with the light-emitting composition according to any one of (1) to (6) in the coating part so as to form the electroluminescent layer thereon; the other electrode being laminated to the electroluminescent layer to form the electroluminescent sheet, the resulting electroluminescent sheet is wound on the wind-up roll.

Advantages of the Invention

The light-emitting composition of the present invention has pressure-sensitive adhesive property and can be laminated to an electrode at ambient temperature, and thus an electroluminescent sheet having high luminance and high reliability which can be mass produced at low cost and efficiently.

Brief Description of the Drawing

[Fig. 1]
The figure is a schematic diagram showing an example of the method for producing an electroluminescent sheet according to the present invention.

Embodiments for carrying out the Invention

The light-emitting composition of the present invention contains (A) a compound having a cyanoethyl group, (B) a pressure-sensitive adhesive resin material and (C) an electroluminescent material, wherein the amount of the component (B) is from 1 to 1, 000 parts by mass, and preferably from 2 to 300 parts by mass per 100 parts by mass of the component (A).

When the amount of the component (B) is less than 1 part by mass, a light-emitting composition having pressure-sensitive adhesive property may not be obtained and the luminance may be decreased due to emission unevenness caused by partial adhesion failure between the composition and an electrodes described below. If the amount exceeds 1, 000 parts by mass, a sufficient luminance may not be obtained.

The amount of the component (C) is preferably from 0.5 to 600 parts by mass, and more preferably from 1 to 400 parts by mass per 100 parts by mass of the total of the components (A) and (B). If the amount of the component (C) is 0.5 part by mass or more, the light-emitting composition may have sufficient function (light-emitting function), and if the case of the amount is 600 parts by mass or less, sufficient pressure-sensitive adhesive property for lamination of the electrode may be obtained.

Examples of the compound having a cyanoethyl group as the component (A) include a cyanoethylated product of polysaccharides, such as cyanoethyl cellulose, cyanoethyl pullulan and cyanoethyl starch; cyanoethylated product of a polysaccharides derivative, such as cyanoethyl hydroxyethyl cellulose and cyanoethyl glycerol pullulan; cyanoethylated product of a polyol, such as cyanoethyl polyvinyl alcohol; cyanoethylated product of a sucrose compound, and a cyanoethylated product of a sugar alcohol compound. These cyanoethylated products may be obtained, for example, in such a manner that a compound having a hydroxyl group, such as the polysaccharides, polysaccharides derivative, polyol, sucrose compound and sugar alcohol compound described above, is reacted with acrylonitrile, and thereby a part or the whole of the hydroxyl group is replaced by a substituent having a cyanoethyl group. The light-emitting composition of the present invention contains a compound having cyanoethyl group, thereby increasing the relative dielectric constant of the part of the electroluminescent layer other than the electroluminescent material, which results in increase of the luminance.

The component (A) preferably has a mass average molecular weight of from 10,000 to 200,000, and more preferably from 20,000 to 150,000. When the mass average molecular weight is in the range, the compound having a cyanoethyl group may favorably function as a binder and form an electroluminescent layer having suitable flexibility.

The content of nitrogen derived from the cyanoethyl group of the compound having a cyanoethyl group (i.e., the nitrogen content) is preferably 5% by mass or more. When the nitrogen content is 5% by mass or more, the relative dielectric constant of the electroluminescent layer may be easily set to a desired value, thereby providing an electroluminescent sheet having a high luminance. It is however difficult to produce the compound having a cyanoethyl group that has a nitrogen content exceeding 20% by mass, and thus the nitrogen content is preferably from 5 to 20% by mass, and more preferably from 8 to 15% by mass. The nitrogen content may be determined by a CHN elemental analysis method.

The compound having a cyanoethyl group preferably has a softening temperature of 20 to 150°C. When the softening point is in this range, an electroluminescent layer having suitable flexibility may be obtained even though the electroluminescent material is contained therein. The softening temperature is measured according to JIS K7206.

The pressure-sensitive adhesive resin material of the component (B) is at least one selected from (a) a pressure-sensitive adhesive resin material having a glass transition temperature of -70 to 5$\underline{o}$C and (b) a pressure-sensitive adhesive resin material containing a rubber-like hydrocarbon elastomer and a tackifier.

Examples of the component (a) include an acrylic resin such as an acrylic polymer. Preferred examples of the acrylic resin having pressure-sensitive adhesive property include a copolymer of a (meth)acrylate ester containing alkyl group having 1 to 20 carbon atoms in ester moiety with a monomer optionally having a functional group such as a carboxyl group and an additional monomer, i.e., a (meth)acrylate ester copolymer. In the present invention, the term "(meth) acrylic acid" means both "acrylic acid" and "methacrylic acid".

Examples of the (meth)acrylate ester containing alkyl group having 1 to 20 carbon atoms in ester moiety include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth) acrylate, isooctyl (meth) acrylate, decyl (meth) acrylate, dodecyl (meth)acrylate, myristyl (meth)acrylate, palmityl (meth) acrylate and stearyl (meth) acrylate. These may be used alone or as a combination of two or more.

Examples of the monomer having a functional group which is optionally used, include an ethylenically unsaturated carboxylic acid such as acrylic acid, methacrylic acid, crotonic acid, maleic acid, itaconic acid and citraconic acid, a hydroxyalkyl (meth)acrylate ester such as 2-hydroxyethyl (meth)acrylate, 2-hydroxypropyl (meth)acrylate, 3-hydoxypropyl (meth)acrylate, 2-hydroxybutyl (meth)acrylate, 3-hydroxybutyl (meth)acrylate and 4-hydroxybutyl (meth)acrylate, and a monoalkylaminoalkyl (meth)acrylate such as monomethylaminoethyl (meth)acrylate, monoethylaminoethyl (meth)acrylate, monomethylaminopropyl (meth)acrylate and monoethylaminopropyl (meth)acrylate. These monomers may be used alone or as a combination of two or more.

Examples of the additional monomer which is optionally used, include a vinyl ester such as vinyl acetate and vinyl propionate, an olefin such as ethylene, propylene and isobutylene, a halogenated olefin such as vinyl chloride and vinylidene chloride, a styrene monomer such as styrene and $\alpha$-methylstyrene, a diene monomer such as butadiene, isoprene and chloroprene, a nitrile monomer such as acrylonitrile and methacrylonitrile, and an acrylamide compound such as acrylamide, N-methylacrylamide and N,N-dimethylacrylamide. These may be used alone or as a combination of two or more.

In the case where the acrylic resin is used in the present invention, it is preferred that the (meth)acrylate ester is polymerized as a major component with at least one optionally selected from the monomer having a functional group and the additional monomer, so as to provide the glass transition temperature thereof within a range of -70 to 5°C. The mode of copolymerization is not particularly limited to, any of random, block and graft copolymers may be used. The molecular weight thereof, which is in terms of average molecular weight, is preferably 300,000 or more, and more preferably from 500,000 to 1,500,000. The mass average molecular weight of a polymer is a value which is determined by gel permeation chromatography using tetrahydrofuran as a developing solvent, and calculated in terms of polystyrene standard.

In order to maintain the pressure-sensitive adhesive property of the acrylic resin at ambient temperature and prevent ooze thereof on bonding the electroluminescent layer to another layer, a crosslinking agent such as a polyisocyanate compound may be reacted with a functional group having active hydrogen (such as hydroxyl group and carboxyl group) in the acrylic resin. Alternatively, an internal crosslinking agent such as a multifunctional acrylate monomer may be copolymerized on polymerization. It is preferred that the glass transition temperature Tg of the acrylic resin after crosslinking is in the range of -70 to 5°C.

In the present invention, the glass transition temperature (Tg) is determined by the following measurement method 1.

Measurement Method 1

According to JIS K7121, Tg is determined by measuring the extrapolated glass transition starting temperature within a temperature range of from -80ºC to 250ºC by using a power compensated differential scanning calorimeter.

The rubber-like hydrocarbon elastomer contained in the component (b) is not particularly limited to, various elastomers such as a diene-based elastomer, an olefin-based elastomer and a styrene-based elastomer may be used.

Examples of the diene hydrocarbon-based elastomer include natural rubber, synthetic isoprene rubber, butadiene rubber, nitrile rubber, hydrogenated nitrile rubber and chloroprene rubber. Examples of the olefin hydrocarbon-based elastomer include polyisobutylene, polybutene, butyl rubber, an ethylene-propylene copolymer elastomer, an ethylene-1-butene copolymer elastomer, an ethylene-propylene-1-butene copolymer elastomer, an ethylene-1-hexene copolymer elastomer, an ethylene-1-octene copolymer elastomer, an ethylene-styrene copolymer elastomer, an ethylene-norbornene copolymer elastomer, a propylene-1-butene copolymer elastomer, an ethylene-propylene-unconjugated diene copolymer elastomer, an ethylene-1-butene-unconjugated diene copolymer elastomer and an ethylene-propylene-1-butene-unconjugated diene copolymer elastomer.

Examples of the styrene-based elastomer include a styrene-ethylene-propylene block copolymer, a styrene-butadiene block copolymer, a styrene-butadiene-styrene block copolymer, a styrene-isoprene block copolymer, a styrene-isoprene-styrene block copolymer, a hydrogenated styrene-butadiene block copolymer, a hydrogenated styrene-butadiene-styrene block copolymer, a hydrogenated styrene-isoprene block copolymer and a hydrogenated styrene-isoprene-styrene block copolymer. In the present invention, the rubber-like hydrocarbon elastomer may be used alone or as a combination of two or more.

Examples of the tackifier contained in the component (b) include a rosin resin, a rosin ester resin, a terpene resin, a terpene phenol resin, a phenol resin, a xylene resin, a coumarone resin, a coumarone indene resin, a styrene resin, an aliphatic petroleum resin, an aromatic petroleum resin, an alicyclic hydrocarbon resin, and a modified resin thereof and a hydrogenated resin thereof, but are not limited to these. The tackifier may be used alone or as a combination of two or more.

In the present invention, the mixture of the component (A) and the component (B) preferably has a relative dielectric constant of 6 or more, and more preferably 6.5 to 30. When the relative dielectric constant is 6 or more, the electroluminescent sheet provides a sufficient luminance in which the component (C) is added.

In the present invention, the relative dielectric constant is determined by the following measurement method 2.

Measurement Method 2

The composition is formed into a sheet film having a thickness of 100 $\mu$m (size: 5 cm $\times$ 5 cm). The capacitance (Cp) at 1 MHz is measured with an impedance analyzer and substituted into the following expression, then the relative dielectric constant ($\varepsilon$) is determined.

$$\varepsilon \;=\; (d \;\times\; Cp) \;/\; (\pi \;\times\; r^2 \;\times\; \varepsilon^0)$$

In the expression, d represents the thickness (m), r represents the radius of electrode ($2.5 \times 10^{-3}$ m) and $\varepsilon^0$ represents the dielectric constant of vacuum ($8.854 \times 10^{-12}$).

The electroluminescent material as the component (C) is not particularly limited as far as it emits light on application of voltage, examples thereof include inorganic EL (electroluminescent) materials such as ZnS:Cu, ZnS:Mn, $ZnS:TbF_3$, $ZnS:SmF_3$, $ZnS:TmF_3$, CaS:Eu and SrS:Ce.

In addition to the components (A), (B) and (C), the light-emitting composition of the present invention may optionally contain other additives such as an anti-settling agent, an organic or inorganic fluorescent substance, an ultraviolet light absorber and an infrared absorber in such a range that does not impair the advantages of the present invention.

The light-emitting composition of the present invention may be produced by dispersive mixing of the components (A), (B) and (C) according to an conventional method, and is preferably produced in such a manner that the component (C) is kneaded and dispersed into a mixture of the component (A) and the component (B) (hereinafter, the mixture of the component (A) and the component (B) may be referred to as a pressure-sensitive adhesive composition) since good production efficiency is obtained. A solvent may be added on kneading and dispersing. As the solvent, methyl ethyl ketone and/or methyl isobutyl ketone may be used. The amount of the solvent used is preferably from 20 to 400 parts by mass per 100 parts by mass of the pressure-sensitive adhesive composition.

The electroluminescent sheet containing the light-emitting composition of the present invention comprises at least a first electrode, an electroluminescent layer and a second electrode, which are laminated in this order, wherein at least one of the first electrode and the second electrode is transparent, and the electroluminescent layer contains the light-emitting composition of the present invention.

The first electrode and the second electrode are not particularly limited as far as any one of which is transparent, and examples thereof include a transparent electrode material, for instance a thin film of a metal oxide film such as indium tin oxide (ITO), indium oxide and tin oxide, an ultrathin film such as a noble metal thin film and an organic material such as an electro-conductive polymer, e.g., polyaniline and polythiophene, a metal foil such as Al, Cu and Ni, and a resin film mixed with an electro-conductive filler such as carbon black.

The thickness of the electroluminescent layer is generally from 0.1 to 200 $\mu$m, and preferably from 1 to 100 $\mu$m.

The electroluminescent sheet of the present invention preferably has a dielectric material layer. The dielectric material layer may be provided between the electroluminescent layer and the first electrode, or between the electroluminescent layer and the second electrode.

Examples of a material of the dielectric material layer include barium titanate, silicon oxide, silicon nitride, antimony-doped tin oxide, yttrium oxide and titanium oxide. It is preferred that the thickness of the dielectric material layer is generally from 0.1 to 50 $\mu$m.

Since the light-emitting composition of the present invention has pressure-sensitive adhesive property, an electroluminescent sheet can be produced at ambient temperature without particularly heating, thus can be produced by using a general coating apparatus. Specifically, by using a coating apparatus which comprises at least a unwinding roll part, a wind-up roll part, a coating part and a laminating part, the electroluminescent sheet may be produced as stated below. Any one of electrode of the first electrode and the second electrode wound-up into a roll is unwound; the unwound electrode is subsequently coated with the light-emitting composition of the present invention in the coating part so as to form the electroluminescent layer thereon; then the other electrode is laminated to the electroluminescent layer to form the electroluminescent sheet. The resulting electroluminescent sheet is wound on the wind-up roll part.

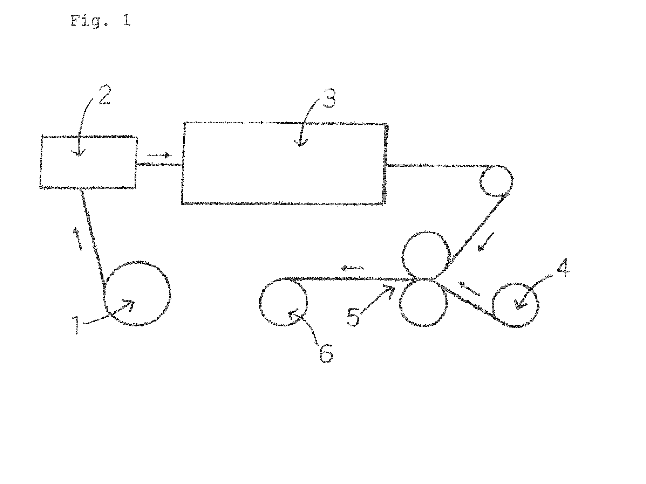

More specifically, as shown in Fig.1, following the first electrode is unwound from a first unwinding roll 1, the light-emitting composition is coated thereon in a coating part 2 and is optionally dried in a drying part 3, the second electrode is subsequently unwound from a second unwinding roll 4 and is then laminated thereto in a laminating part 5, and the electroluminescent sheet is wound on the wind-up roll 6. The coating processes of the light-emitting composition include, but not particularly limited to, die-coating and knife-coating. The drying is generally performed at 80 to 150°C for 10 seconds to 5 minutes.

Examples

The present invention will be described in more detail with reference to examples, but the present invention is not limited to the examples unless departing from the scope of the present invention.

The measurements of physical properties and evaluations in Examples and Comparative Examples were performed in the following manners.

1. Measurement of Glass Transition Temperature (Tg)

The glass transition temperature was measured according to aforementioned Measurement Method 1 by using Pyris 1 DSC, a trade name, produced by Perkin-Elmer, Inc. as an input compensated differential scanning calorimeter.

2. Measurement of Relative Dielectric Constant

(A) A methyl ethyl ketone solution of a compound having a cyanoethyl group, (B) a methyl ethyl ketone solution of a pressure-sensitive adhesive composition, and a mixture of (A) a methyl ethyl ketone solution of a compound having a cyanoethyl group and (B) a methyl ethyl ketone solution of a pressure-sensitive adhesive composition (a pressure-sensitive adhesive resin material) were coated on a release film (product name:PET-3811, produced by Lintec Corporation) and dried. After the release film was removed, a sheet film having a thickness of 100 $\mu$m was formed and measured according to Measurement Method 2 described above by using 4194A, a product name, produced by HEWLETT PACKARD Company as an impedance analyzer. It is noted that drying was performed at 110°C for 2 minutes.

3. Measurement of Mass Average Molecular Weight

The mass average molecular weight was determined by a gel permeation chromatography (GPC) method. The apparatus and conditions used are shown below.

GPC apparatus: high-speed GPC apparatus, HLC-8020GPC, produced by Tosoh Corporation
Columns: "TSK guard column HXL-L", "TSK Gel G400HXL", "TSK Gel G3000HXL" and "TSK Gel G2000HXL", produced by Tosoh Corporation, connected in this order to the apparatus
Mobile phase: tetrahydrofuran
Column temperature: 40°C
Flow rate: 1.0 mL/min
Detector: differential refractive index detector (produced by Tosoh Corporation)

4. Measurement of Nitrogen Content

The nitrogen content was determined by a CHN elemental analysis method by using an elemental analysis apparatus (2400II CHNS, a trade name, produced by Perkin-Elmer, Inc.)

5. Measurement of Softening Temperature

The softening temperature was measured according to A50 defined in JIS K7206.

6. Measurement of Adhesive Force

A coating liquid of the light-emitting composition was applied in a thickness of 20 $\mu$m on a polyethylene terephthalate film (PET38 T-100, a trade name, produced by Mitsubishi Plastics, Inc.) and dried (at 110°C for 2 minutes), which was then measured for a 180° peeling adhesion according to JIS Z0237 (2006).

7. Measurement of Luminance

When driven at 250 V and 1,500 Hz, the luminance was measured by using a luminance meter (LS-100, a trade name, produced by Konica Minolta Sensing, Inc.)

8. Measurement of Illuminance

When driven at 250 V and 1,500 Hz, the illuminance at a position 10 cm away from the electroluminescent surface was measured by using an incident color meter (CL-200, a trade name, produced by Konica Minolta Sensing, Inc.)

9. Evaluation of Condition of Light-emitting Surface

When driven at 250 V and 1,500 Hz, the light-emitting surface was visually evaluated for emission unevenness as below.
good: emission is uniform over the entire surface
emission unevenness: unevenness or non-emitting portion found on the light-emitting surface

Example 1

To 100 parts by mass of cyanoethyl polyvinyl alcohol (CR-V, a trade name, produced by Shin-Etsu Chemical Co. , Ltd., relative dielectric constant: 17.76, mass average molecular weight: 60,000, nitrogen content: 12.9% by mass, softening temperature: 30°C) as (A) a compound having a cyanoethyl group, 11 parts by mass of an acrylate ester copolymer (copolymer with butyl acrylate/acrylic acid = 80/20 (mass ratio), mass average molecular weight: 700,000, Tg = -34°C) as the pressure-sensitive adhesive resin material (B) and 340 parts by mass of methyl ethyl ketone as a solvent were added to prepare a solution of a pressure-sensitive adhesive composition.

Then, to 100 parts by mass of the solid content of the solution of the pressure-sensitive adhesive composition, 400 parts by mass of an EL fluorescent material containing ZnS:Cu (GG25 Blue Green, a trade name, produced by Osram Sylvania, Inc.) was mixed to prepare a coating liquid of the light-emitting composition. The composition which was coated on side of ITO of a second electrode substrate (ITO/polyethylene terephthalate (80 $\mu$m), produced by Oike & Co., Ltd.) to a thickness of 55 $\mu$m (after drying) and then dried at 110°C for 2 minutes, thereby providing a first laminated composite having an electroluminescent layer. Thereafter, the electroluminescent layer was laminated onto side of an aluminum foil (first electrode) of a first electrode substrate (aluminum foil (12 μm) /polyethylene terephthalate (50 μm), ALPET, a trade name, produced by Ajiya Alminum KK), thereby providing an electroluminescent sheet.

The results of measurement for the relative dielectric constant of the pressure-sensitive adhesive composition and the adhesion force of the light-emitting composition are shown in Table 1. For the resulting electroluminescent sheet, the results of measurement for the luminescence and the illuminance, and the condition of the light-emitting surface are also shown in Table 1.

Example 2

An electroluminescent sheet was obtained in the same manner as in Example 1 except that to 100 parts by mass of the cyanoethyl polyvinyl alcohol, 43 parts by mass of the acrylate ester copolymer as the pressure-sensitive adhesive resin material and 340 parts by mass of methyl ethyl ketone as a solvent were added to prepare a solution of a pressure-sensitive adhesive composition.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 3

An electroluminescent sheet was obtained in the same manner as in Example 1 except that to 100 parts by mass of the cyanoethyl polyvinyl alcohol, 100 parts by mass of the acrylate ester copolymer as the pressure-sensitive adhesive resin material and 340 parts by mass of methyl ethyl ketone as a solvent were added to prepare a solution of a pressure-sensitive adhesive composition.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 4

An electroluminescent sheet was obtained in the same manner as in Example 1 except that a copolymer of butyl acrylate/acrylic acid = 90/10 (mass ratio) (mass average molecular weight: 700,000, Tg = -45°C) was used as the pressure-sensitive adhesive resin material instead of the acrylate ester copolymer used in Example 1.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 5

An electroluminescent sheet was obtained in the same manner as in Example 1 except that a copolymer of butyl acrylate/2-hydroxyethyl acrylate = 95/5 (mass ratio) (mass average molecular weight: 710, 000, Tg = -52°C) was used as the pressure-sensitive adhesive resin material instead of the acrylate ester copolymer used in Example 1.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 6

An electroluminescent sheet was obtained in the same manner as in Example 1 except that a copolymer of 2-ethylhexyl acrylate/ethyl acrylate/vinyl acetate/acrylamide = 56/27/17/2 (mass average molecular weight: 700,000, Tg = -56°C) was used as the pressure-sensitive adhesive resin material instead of the acrylate ester copolymer used in Example 1.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 7

An electroluminescent sheet was obtained in the same manner as in Example 1 except that cyanoethyl hydroxyethyl cellulose (CR-E, produced by Shin-Etsu Chemical Co., Ltd., relative dielectric constant: 17.10, mass average molecular weight: 110,000, nitrogen content: 12.4% by mass, softening temperature: 55°C) was used instead of the cyanoethyl polyvinyl alcohol.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 8

An electroluminescent sheet was obtained in the same manner as in Example 1 except that cyanoethyl pullulan (CR-S, produced by Shin-Etsu Chemical Co., Ltd., relative dielectric constant: 17.25, mass average molecular weight: 49,000, nitrogen content: 10.0% by mass, softening temperature: 95°C) was used instead of the cyanoethyl polyvinyl alcohol.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 9

An electroluminescent sheet was obtained in the same manner as in Example 1 except that a mixture of 50 parts by mass of a styrene-ethylene-propylene block copolymer (Septon 2043, a trade name, produced by Kuraray Co., Ltd.) as the rubber-like hydrocarbon elastomer and 50 parts by mass of a terpene phenol resin (YS Polyster 2115, a trade name, produced by Yasuhara Chemical Co., Ltd.) as the tackifier was used as the pressure-sensitive adhesive resin material instead of the acrylate ester copolymer.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 10

An electroluminescent sheet was obtained in the same manner as in Example 1 except that a mixture of 100 parts by mass of a polybutene-polyisobutene resin (Evertack SA400E, a trade name, produced by JX Nippon Oil & Energy Corporation) as the rubber-like hydrocarbon elastomer and 50 parts by mass of a tackifier (a hydrogenated petroleum resin, Arkon P-125, a trade name, produced by Arakawa Chemical Industries, Ltd.) was used as the pressure-sensitive adhesive resin material instead of the acrylate ester copolymer.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Example 11

By using the coating apparatus shown in Fig. 1, the light-emitting composition produced in Example 1 was coated on side of ITO of a unwound second electrode substrate (ITO/polyethylene terephthalate (80 $\mu$m), produced by Oike & Co., Ltd) to a thickness of 55 $\mu$m (after drying) and then dried (110$^{\circ}$C for 2 minutes) to form an electroluminescent layer. Then, at an the laminating part, the electroluminescent layer was laminated onto side of an aluminum foil of a first electrode substrate (aluminum foil (12 $\mu$m) /polyethylene terephthalate (50 $\mu$m), ALPET, a trade name, produced by Ajiya Aluminum KK) to provide an electroluminescent sheet.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Comparative Example 1

An electroluminescent sheet was obtained in the same manner as in Example 1 except that 100 parts by mass of cyanoethyl polyvinyl alcohol (CR-V, a trade name, produced by Shin-Etsu Chemical Co., Ltd., described above), 340 parts by mass of methyl ethyl ketone as a solvent, and 400 parts by mass of an EL fluorescent material containing ZnS:Cu (GG25 Blue Green, a trade name, produced by Osram Sylvania, Inc.) were mixed to prepare a light-emitting composition containing no pressure-sensitive adhesive resin material.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Comparative Example 2

An electroluminescent sheet was obtained in the same manner as in Example 1 except that only the acrylate ester copolymer and 340 parts by mass of methyl ethyl ketone as a solvent were used a pressure-sensitive adhesive composition solution, but the compound having a cyanoethyl group was not used.

As similar to Example 1, the results of measurement of the relative dielectric constant of the pressure-sensitive adhesive composition and the adhesion force of the light-emitting composition, and the results of measurement of the luminance and the illuminance and the evaluation of the condition of the light-emitting surface of the resulting electroluminescent sheet are shown in Table 1.

Table 1

| | Relative dielectric constant of pressure-sensitive adhesive composition | Adhesion force of light-emitting composition | Luminance | Illuminance | Condition of light-emitting surface |
| --- | --- | --- | --- | --- | --- |
| | | (N/25 mm) | (cd/m$^2$) | (lx) | |
| Example 1 | 13.37 | 1.2 | 392.9 | 1,185.1 | good |
| Example 2 | 9.50 | 3.4 | 306.0 | 910.0 | good |
| Example 3 | 6.54 | 8.9 | 271.2 | 843.1 | good |
| Example 4 | 13.11 | 1.2 | 388.2 | 1,179.2 | good |
| Example 5 | 12.97 | 1.1 | 381.2 | 1,122.0 | good |
| Example 6 | 13.21 | 1.2 | 391.5 | 1,231.5 | good |
| Example 7 | 12.99 | 1.2 | 390.4 | 1,210.1 | good |
| Example 8 | 12.11 | 1.1 | 380.1 | 1,190.3 | good |
| Example 9 | 13.11 | 1.1 | 390.1 | 1,185.1 | good |
| Example 10 | 13.17 | 1.1 | 391.5 | 1,185.0 | good |
| Example 11 | 13.37 | 1.2 | 393.0 | 1,188.4 | good |
| Comparative Example 1 | 17.76 | 0.0 | 270.5 | 810.0 | unevenness on emitting surface |
| Comparative Example 2 | 4.26 | 23.5 | 91.6 | 269.2 | good |

The relative dielectric constant in Comparative Example 1 is the relative dielectric constant of the compound having a cyanoethyl group (cyanoethyl vinyl alcohol).

The relative dielectric constant in Comparative Example 2 is the relative dielectric constant of the pressure-sensitive adhesive composition (acrylate ester copolymer).

As shown in Table 1, the electroluminescent sheets of Examples 1 to 11 had high luminance, which resulted in high illuminance, and had good condition of the light-emitting surface. On the other hand, the electroluminescent sheet of Comparative Example 1 containing no pressure-sensitive adhesive resin material exhibited unevenness on the light-emitting surface and had low luminance and illuminance, and the electroluminescent sheet of Comparative Example 2 containing no compound having a cyanoethyl group had low luminance.

Industrial Applicability

As described above, since the light-emitting composition of the present invention has pressure-sensitive adhesive property and can be laminated onto an electrode at ambient temperature, it is possible to provide an electroluminescent sheet with high luminescence and reliability, which enables to produce efficiently on a large scale at a low cost.

Accordingly, it is considerably useful as practical light-emitting composition and electroluminescent sheet suitable for producing inorganic EL devices and the like.

Reference Signs List

1    first unwinding roll
2    coating part
3    drying part
4    second unwinding roll
5    laminating part
6    wind-up roll

**Claims**

1.  A light-emitting composition comprising

    (A) a compound having a cyanoethyl group,
    (B) a pressure-sensitive adhesive resin material which contains at least one selected from (a) a pressure-sensitive adhesive resin material having a glass transition temperature of from -70 to 5ºC and (b) a pressure-sensitive adhesive resin material containing a rubber-like hydrocarbon elastomer and a tackifier, and
    (C) an electroluminescent material, wherein an amount of the component (B) is from 1 to 1,000 parts by mass per 100 parts by mass of the component (A).

2.  The light-emitting composition according to claim 1, wherein the component (A) has a mass average molecular weight of 10,000 to 200,000.

3.  The light-emitting composition according to claim 1, wherein an amount of the component (C) is from 0.5 to 600 parts by mass per 100 parts by mass of the total of the component (A) and the component(B).

4.  The light-emitting composition according to claim 1, wherein the component (C) is dispersed into a mixture of the component (A) and the component (B).

5.  The light-emitting composition according to claim 4, wherein the mixture of the component (A) and the component (B) has a relative dielectric constant of 6 or more.

6.  The light-emitting composition according to any of the claims 1 to 5, the composition having pressure-sensitive adhesive property.

7.  An electroluminescent sheet comprising at least a first electrode, an electroluminescent layer and a second electrode, laminated in this order, wherein at least one of the first electrode and the second electrode being transparent, and the electroluminescent layer contains the light-emitting composition according to any one of claims 1 to 6.

8.  A method for producing the electroluminescent sheet according to claim 7, by using a coating apparatus comprising at least an unwinding roll part, a wind-up roll part, a coating part and a laminating part, which comprises any one of electrode of the first electrode and the second electrode wound-up into a roll being unwound; the unwound electrode being coated with the light-emitting composition according to any one of claims 1 to 6 in the coating part so as to form the electroluminescent layer thereon; the other electrode being laminated to the electroluminescent layer to form the electroluminescent sheet, the resulting electroluminescent sheet is wound on the wind-up roll.

**Patentansprüche**

1. Lichtemittierende Zusammensetzung, umfassend

   (A) eine Verbindung mit einer Cyanoethylgruppe,
   (B) ein druckempfindliches adhäsives Harzmaterial, welches mindestens eines enthält, das ausgewählt wird aus (a) einem druckempfindlichen adhäsiven Harzmaterial mit einer Glasübergangstemperatur von -70 bis 5°C und (b) einem druckempfindlichen adhäsiven Harzmaterial, das ein kautschukartiges Kohlenwasserstoffelastomer und ein Klebrigkeitsmittel enthält, und
   (C) ein elektrolumineszierendes Material, wobei die Menge der Komponente (B) 1 bis 1000 Gewichtsteile pro 100 Gewichtsteile der Komponente (A) beträgt.

2. Lichtemittierende Zusammensetzung nach Anspruch 1, wobei die Komponente (A) ein gewichtsmittleres Molekulargewicht von 10.000 bis 200.000 aufweist.

3. Lichtemittierende Zusammensetzung nach Anspruch 1, wobei die Menge der Komponente (C) von 0,5 bis 600 Gewichtsteile pro 100 Gewichtsteile der Gesamtmenge der Komponente (A) und der Komponente (B) beträgt.

4. Lichtemittierende Zusammensetzung nach Anspruch 1, wobei die Komponente (C) in einer Mischung der Komponente (A) und der Komponente (B) dispergiert ist.

5. Lichtemittierende Zusammensetzung nach Anspruch 4, wobei das Gemisch der Komponente (A) und der Komponente (B) eine relative dielektrische Konstante von 6 oder mehr aufweist.

6. Lichtemittierende Zusammensetzung nach einem der Ansprüche 1 bis 5, wobei die Zusammensetzung druckempfindliche Klebeeigenschaften aufweist.

7. Elektrolumineszente Folie, umfassend mindestens eine erste Elektrode, eine elektrolumineszierende Schicht und eine zweite Elektrode, die in dieser Reihenfolge laminiert sind, wobei mindestens eine der ersten Elektrode und der zweiten Elektrode transparent ist, und die elektrolumineszierende Schicht die lichtemittierende Zusammensetzung nach einem der Ansprüche 1 bis 6 enthält.

8. Verfahren zur Herstellung der elektrolumineszierenden Folie nach Anspruch 7 unter Verwendung einer Beschichtungsapparatur, die mindestens einen Abrollwalzenteil, einen Aufrollwalzenteil, einen Beschichtungsteil und einen Laminierungsteil umfasst, welches Aufwickeln einer beliebigen Elektrode der ersten Elektrode und der zweiten Elektrode auf eine Rolle umfasst, die abgewickelt wird; wobei die abgewickelte Elektrode mit der lichtemittierenden Zusammensetzung nach einem der Ansprüche 1 bis 6 im Beschichtungsteil beschichtet wird, so dass die elektrolumineszierende Schicht darauf ausgebildet wird; die andere Elektrode auf die elektrolumineszierende Schicht laminiert wird, um die elektrolumineszierende Folie zu bilden, und die resultierende elektrolumineszierende Folie auf die Aufrollwalze aufgewickelt wird.

**Revendications**

1. Composition émettrice de lumière comprenant

   (A) un composant ayant un groupe cyanoéthyle,
   (B) un matériau de résine adhésif sensible à la pression qui contient au moins un choisi parmi (a) un matériau de résine adhésif sensible à la pression ayant une température de transition vitreuse de -70 à 5 °C et (b) un matériau de résine adhésif sensible à la pression contenant un élastomère hydrocarbure de type caoutchouc et un agent d'adhésivité, et

(C) un matériau électroluminescent, une quantité du composant (B) étant de 1 à 1000 parties en masse par 100 parties en masse du composant (A).

2. Composition émettrice de lumière selon la revendication 1, dans laquelle le composant (A) a un poids moléculaire moyen en masse de 10.000 à 200.000.

3. Composition émettrice de lumière selon la revendication 1, dans laquelle une quantité du composant (C) est de 0,5 à 600 parties en masse par 100 parties en masse du total du composant (A) et du composant (B).

4. Composition émettrice de lumière selon la revendication 1, dans laquelle le composant (C) est dispersé dans un mélange du composant (A) et du composant (B).

5. Composition émettrice de lumière selon la revendication 4, dans laquelle le mélange du composant (A) et du composant (B) a une constante diélectrique relative de 6 ou plus.

6. Composition émettrice de lumière selon l'une quelconque des revendications 1 à 5, la composition ayant une propriété adhésive sensible à la pression.

7. Feuille électroluminescente comprenant au moins une première électrode, une couche électroluminescente et une seconde électrode, laminées dans cet ordre, dans laquelle au moins une de la première électrode et de la seconde électrode est transparente, et la couche électroluminescente contient la composition émettrice de lumière selon l'une quelconque des revendications 1 à 6.

8. Procédé de production de la feuille électroluminescente selon la revendication 7, en utilisant un appareil de revêtement comprenant au moins une partie de rouleau de déroulement, une partie de rouleau d'enroulement, une partie de revêtement et une partie de lamination, qui comprend l'une quelconque des électrodes de la première électrode et de la seconde électrode enroulée dans un rouleau qui est déroulé ; l'électrode déroulée étant revêtue avec la composition émettrice de lumière selon l'une quelconque des revendications 1 à 6 dans la partie de revêtement de manière à former la couche électroluminescente dessus ; l'autre électrode étant laminée sur la couche électroluminescente pour former la feuille électroluminescente, la feuille électroluminescente obtenue est enroulée sur le rouleau d'enroulement.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7058636 B
- JP 5047472 A

- US 3421037 A